Europäisches Patentamt

European Patent Office

Office européen des brevets

(11) Numéro de publication: **0 370 844**
**A1**

## (12) DEMANDE DE BREVET EUROPEEN

(21) Numéro de dépôt: 89402914.9

(22) Date de dépôt: 23.10.89

(51) Int. Cl.⁵: **C08J 5/12, C09J 157/00, C09J 11/06**

(30) Priorité: 26.10.88 FR 8813977

(43) Date de publication de la demande:
**30.05.90 Bulletin 90/22**

(84) Etats contractants désignés:
**AT BE CH DE ES GB GR IT LI LU NL SE**

(71) Demandeur: **S.A. Financière Eternit**
**33, rue d'Artois**
**F-75008 Paris(FR)**

(72) Inventeur: **Persyn, Jean-Pierre**
**30, rue Gabriel Perelle**
**F-27200 Vernon(FR)**

(74) Mandataire: **Armengaud Ainé, Alain**
**Cabinet ARMENGAUD AINE 3 Avenue**
**Bugeaud**
**F-75116 Paris(FR)**

(54) **Colle pour matieres plastiques et procédé de mise en oeuvre de cette colle.**

(57) Colle ou adhésif pour matières plastiques composé d'une solution d'au moins un polymère organique choisi dans le groupe comprenant les polymères ou copolymères vinyliques, styréniques, acryliques, dans un mélange de solvants contenant de la N-méthylpyrrolidone et permettant la précipitation en présence d'eau du ou des polymères ou copolymères en solution, caractérisé en ce que le mélange de solvants contient de 21 à 99% en poids de N-méthylpyrrolidone et en outre des co-solvants choisis dans le groupe qui comprend : le tétrahydrofurane, la diméthyl-formamide, la diméthyl-acétamide, le diacétonealcool, l'acétate, méthoxy-3-butylique, le diméthyléther diglycolique, l'isophorone.

EP 0 370 844 A1

EP 0 370 844 A1

## COLLE POUR MATIERES PLASTIQUES ET PROCEDE DE MISE EN OEUVRE DE CETTE COLLE

La présente invention est relative à une nouvelle composition de colle ou d'adhésif pour produits en matières plastiques. Elle concerne également un procédé de mise en oeuvre de ladite colle.

Il est connu que l'utilisation des matières plastiques, notamment des polymères, tend à se généraliser dans l'industrie du bâtiment par exemple où de nombreux composants ou pièces sont désormais réalisés en de telles matières. On peut citer en particulier : les tubes de descente d'eau, les gouttières, les conduites d'eaux chaudes et/ou froides, les canalisations sanitaires, les chassis de fenêtres et de portes, etc. Ces composants sont généralement constitués matières polymères vinyliques du type homo ou copolymères ou alliages ou mélanges, tels le chlorure de polyvinyle (PVC), le chlorure de polyvinyle surchloré (PVCC), et en matières plastiques styréniques telles l'acrylonitrile - butadiène - styrène (ABS) et ils doivent être assemblés par collage en usine ou sur les chantiers, les colles ou adhésifs utilisés dans ce but devant répondre à un certain nombre d'exigences et de prescriptions parmi lesquelles on peut citer notamment :

- une faible toxicité du milieu solvant entrant dans la composition de la colle pour des raisons d'hygiène et de sécurité lors de la mise en oeuvre de la colle, ainsi que pour la prévention de l'inhalation volontaire ;
- une ininflammabilité de ces solvants ;
- une mise en oeuvre dans des gammes de température étendues : une même colle devant pouvoir être utilisée dans des climats différents ;
- un temps de prise réduit pour diminuer les périodes d'immobilisation des composants, notamment les délais de mise en eau quand il s'agit de conduite ou de canalisation d'écoulement.

On connaît à l'heure actuelle sur le marché, des colles à solvants volatiles et inflammables du type tétrahydrofurane, cyclohexanone, toluène, cétone, etc ... Ces solvants utilisés dans de telles colles appelés couramment "colles à solvants forts" sont de plus en plus contestés en raison du risque qu'ils représentent tant en matière d'incendie que pour la santé des utilisateurs (problèmes d'inhalations volontaires ou non).

L'utilisation de ces colles est limitée généralement à la réalisation de collage à température ambiante de composants ou d'articles en matières plastiques synthétiques pouvant transporter des fluides jusqu'à une température voisine de 60°C . Par contre, pour effectuer des collages sur de telles pièces utilisées pour des installations où l'eau circulant peut atteindre 90°C avec ou sans calorifugeage (par exemple des conduites d'installations de chauffage central) ce type de colle ne donne pas de résultats satisfaisants.

Pour réduire les problèmes de toxicité et d'inflammabilité cités précédemment, diverses tentatives ont été faites récemment pour réaliser des colles ou adhésifs faisant appel à des solvants peu volatiles et peu toxiques.

On peut citer, à titre d'exemples de telles tentatives :
- le brevet EP-046 957 qui décrit un procédé de réduction de la concentration des vapeurs de solvants dans le traitement des colles contenant des solvants organiques selon lequel on remplace de 0,1 à 20 % en poids du solvant par une N-alkylpyrrolidone dans laquelle le reste alkyle contient de 1 à 6 atomes de carbone. Cependant, la colle obtenue par la mise en oeuvre de ce procédé contient encore une proportion relativement importante de solvants toxiques et inflammables et cette solution ne répond donc pas aux critères recherchés d'absence de risque pour la santé de l'utilisateur et pour l'incendie.
- le brevet EP-0 111 250 qui a pour objet une colle composée d'une solution d'au moins un polymère organique synthétique insoluble dans l'eau (PVC, ABS, etc.) dans un solvant qui consiste en au moins un composé choisi dans le groupe comprenant les lactones ou lactames miscibles à l'eau, à 5 ou 6 éléments, ayant un point de fusion au maximum de - 10°C, un point d'ébullition d'au moins 200°C et un point éclair d'au moins 90°C, ce solvant pouvant être notamment de la N-méthylpyrrolidone. Si cette colle donne toute satisfaction en ce qui concerne la non toxicité et l'ininflammabilité, elle présente par contre un temps de prise certes amélioré par rapport aux colles à solvants forts, mais encore trop lent. De plus, il s'avère que l'emploi de cette colle a tendance à fragiliser les pièces à coller et à engendrer une faiblesse de l'assemblage préjudiciable pour certaines applications extrêmes de la colle.
- le brevet US-A-4 687 798 qui a pour objet une colle comportant de l'acétate d'éthyle en mélange avec de la N-méthylpyrrolidone. Cependant, cette colle ne donne pas toute satisfaction, ni garantie, notamment du point de vue sécurité car l'acétate d'éthyle en tant que co-solvant est inflammable.

En conséquence, la présente invention se propose d'apporter une nouvelle composition de colle peu toxique, difficilement inflammable (son point éclair étant supérieur à 55°C en coupe fermée) permettant d'assurer sans risque des collages de conduites destinées à véhiculer des fluides, jusqu'à des températures pouvant atteindre 90°C et plus (cas des conduites calorifugées, pour le chauffage notamment), sans entraîner de fragilisation des pièces à coller. De plus, cette nouvelle composition de colle présente un

2

temps de prise réduit par rapport aux colles de l'art antérieur et surtout par rapport aux colles à solvants forts, puisque en comparant les résultats obtenus avec ces dernières et dans le cas de circulation d'eau froide ou à des températures inférieures ou égales à 60°C, on obtient, grâce à la nouvelle composition de colle selon l'invention, une réduction du délai de mise en eau supérieur à 50 %.

Cette invention a donc pour objet une colle ou adhésif pour matières plastiques, composé d'au moins un polymère organique choisi dans le groupe comprenant les polymères ou copolymères vinyliques, styréniques, acryliques, dans un mélange de solvants contenant de la N-méthylpyrrolidone et permettant la précipitation en présence d'eau du ou des polymères ou copolymères en solution, caractérisé en ce que le mélange de solvants contient de 21 à 99 % en poids de N-méthylpyrrolidone et, en outre, des co-solvants choisis dans le groupe qui comprend : le tétrahydrofurane, la diméthyl-formamide, le diméthyl-acétamide, le diacétonealcool, l'acétate méthoxy-3-butylique, le diméthyléther diglycolique, l'isophorone.

Ainsi, selon cette invention, la colle ou adhésif comprend les constituants précisés ci-après :

1- Un ou plusieurs polymères :

Il s'agit essentiellement de polymères organiques vinyliques, styréniques, acryliques et leurs copolymères, par exemple : le PVC, le PVC-C, l'ABS, etc... seuls ou en mélanges ou combinaisons.

2- Un mélange de solvants :

Il s'agit d'un mélange faiblement toxique et difficilement inflammable permettant la dissolution ou le gonflement des matières plastiques à assembler et qui assure la précipitation en présence d'eau du ou des polymères mis en solution dans la colle. Ce mélange contient :
- de la N-méthylpyrrolidone en une proportion de 21 à 99 % en poids de la totalité du mélange de solvants ;
- des co-solvants répondant également aux objectifs recherchés qui, ainsi qu'on l'a vu ci-dessus sont choisis dans le groupe qui comprend : le tétrahydrofurane, la diméthyl-formamide, le diméthyl-acétamide, le diacétonealcool, l'acétate méthoxy-3-butylique, le diméthyléther diglycolique, l'isophorone.

Selon l'invention, la colle peut également comporter un ou plusieurs agents de contrôle de rhéologie en une proportion de 0 à 10 % en poids par rapport à la composition totale et éventuellement en outre divers additifs en une proportion ne dépassant pas 5 % en poids.

Parmi les agents de contrôle de rhéologie utilisés dans la colle selon l'invention, on peut citer notamment : la silice colloïdale, la bentonite, des dérivés de cellulose, des micro-fibres synthétiques organiques ou minérales, et parmi les additifs, on peut mentionner des stabilisants, des anti-oxydants, des absorbants, des colorants, etc.

A titre d'exemple non limitatif de formulation, on a donné ci-après une composition de colle selon l'invention :

| | |
|---|---|
| - Résine PVC (SOLVIC 258) ... | 16 % en poids |
| - N-méthyl-pyrrolidone ... | 67,8 % en poids |
| - Diméthyl formamide ... | 12 % en poids |
| - Agent épaississant (HDK N20) ... | 4 % en poids |
| - Agent anti-oxydant résine epoxy (EUREPOX 720) ... | 0,1 % en poids |
| - Agent stabilisant (INGESTAB BZ 529) ... | 0,1 % en poids |

Cette composition a été testée et comparée aux colles à solvants forts et les résultats suivants ont été constatés :
- meilleure tenue des collages PVC/PVC en pression alternée à 20°C et sous une pression de 20 à 60 bars $(2.10^6$ à $6.10^6$ Pascal) avec un nombre de cycles avant rupture supérieur de 6 à 14 %;
- meilleure tenue des collages PVC-C/PVC-C et surtout pour les hautes températures avec calorifuge. Les assemblages réalisés à partir de colles à solvants forts cèdent au bout de deux heures maximum à 90°C sous 6 bars de pression $(6.10^5$ Pascal), tandis que les mêmes assemblages réalisés à partir de la colle selon l'invention, n'ont subi aucun dommage après 1700 heures dans le mêmes conditions ;
- réduction supérieure à 50 % du délai de mise en eau dans le cas de circulation d'eau froide ou à des températures inférieures ou égales à 60°C.

De même, cette colle a été testée et comparée à la colle suivant l'EP-111 250 et les résultats ci-après ont été constatés pour la colle selon la présente invention :

- Absence de fragilisation des pièces à assembler et notamment en utilisation à haute température et/ou pour le collage de certains polymères spéciaux PVC-C par exemple ;

- Meilleure performance de 25 à 30 % de la résistance des collages en utilisation à haute température calorifugée.

Par ailleurs, la vitesse de collage peut être sensiblement accrue, dans le cas de collages réalisés sur des canalisations transportant de l'eau, dès lors que, selon le procédé de mise en oeuvre de la colle objet de la présente invention, après la mise en oeuvre de la colle, puis emboîtement des éléments à assembler et sans attendre la prise complète de cette dernière, on la met en présence d'eau, ce qui n'est pas réalisable avec des colles du type à solvants forts pour lesquelles la prise doit se faire en absence complète d'eau. En effet, il s'avère que, dans le cas de la colle suivant l'invention, et contrairement aux idées acquises, l'eau joue un rôle d'accélérateur de prise et que, de ce fait, on peut mettre le collage en présence d'eau dès l'assemblage, pour permettre une utilisation plus rapide de la canalisation.

Il demeure bien entendu que cette invention n'est pas limitée aux exemples de mise en oeuvre décrits ici mais qu'elle en englobe toutes les variantes.

**Revendications**

1 - Colle ou adhésif pour matières plastiques composé d'une solution d'au moins un polymère organique choisi dans le groupe comprenant les polymères ou copolymères vinyliques, styréniques, acryliques, dans un mélange de solvants contenant de la N-méthylpyrrolidone et permettant la précipitation en présence d'eau du ou des polymères ou copolymères en solution, caractérisé en ce que le mélange de solvants contient de 21 à 99% en poids de N-méthylpyrrolidone et en outre des co-solvants choisis dans le groupe qui comprend : le tétrahydrofurane, la diméthyl-formamide, le diméthyl-acétamide, le diacétonealcool, l'acétate méthoxy-3-butylique, le diméthyléther diglycolique, l'isophorone.

2 - Colle selon la revendication 1, caractérisée en ce qu'elle contient en outre de 0 à 10 % en poids d'un ou de plusieurs agents de contrôle de rhéologie.

3 - Colle selon la revendication 2, caractérisée en ce que lesdits agents de contrôle de rhéologie sont choisis dans le groupe qui comprend la silice colloïdale, la bentonite, des dérivés de cellulose, des micro-fibres synthétiques organiques ou minérales.

4 - Colle selon l'une quelconque des revendications précédentes, caractérisée en ce qu'elle contient en outre de 0 à 5 % en poids d'additifs notamment de stabilisants, absorbants, colorants, antioxydants.

5 - Procédé de mise en oeuvre d'une colle selon l'une quelconque des revendications précédentes, caractérisé en ce que, immédiatement après application de la colle et emboîtement des éléments à assembler, la prise de la colle est accélérée en présence d'eau.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A,D | US-A-4 687 798 (KING, Sr.)<br>* Exemples 1,3 *<br>--- | 1 | C 08 J 5/12<br>C 09 J 157/00<br>C 09 J 11/06 |
| A | US-A-2 616 868 (HEISENBERG & KLEINE)<br>* Exemple 2 *<br>----- | 1 | |

DOMAINES TECHNIQUES
RECHERCHES (Int. Cl.5)

C 08 J
C 08 L
C 09 J

Le présent rapport a été établi pour toutes les revendications

| Lieu de la recherche | Date d'achèvement de la recherche | Examinateur |
|---|---|---|
| LA HAYE | 12-12-1989 | SCHUELER D.H.H. |

CATEGORIE DES DOCUMENTS CITES

X : particulièrement pertinent à lui seul
Y : particulièrement pertinent en combinaison avec un
 autre document de la même catégorie
A : arrière-plan technologique
O : divulgation non-écrite
P : document intercalaire

T : théorie ou principe à la base de l'invention
E : document de brevet antérieur, mais publié à la
 date de dépôt ou après cette date
D : cité dans la demande
L : cité pour d'autres raisons

................................................................
& : membre de la même famille, document correspondant

EPO FORM 1503 03.82 (P0402)